# EUROPEAN PATENT APPLICATION

(11) **EP 1 906 613 A1**
(43) Date of publication of application: **02.04.2008**
(21) Application number: 06020198.5
(22) Date of filing: 27.09.2006
(51) Int. Cl.: H04L 29/06, H04L 1/18

(54) **WLAN packet control protocol for video streaming**

(71) Applicant: Sercomm Corporation, Yo-Yi Road Ju-Nan Miao-Li Hsien (TW)
(72) Inventor: Cao, Ruo-Yu, Suzhou Industrial Park Jiansu (CN)
(74) Representative: Gee, Steven William

(57) **Abstract**

A wireless LAN packet control protocol for a video streaming is disclosed herein, which operates on or below the IP layer, and checks the continuity of a number of streaming packets received based on the continuous serial numbers assigned to the packets. If discontinuity is detected, the receiver (12) will request retransmission of the corresponding packet only, and will temporarily store the other received but discontinuous packets, instead of discarding them directly as in the prior art. After the retransmitted streaming packets are received, they will be sent along with other temporarily stored streaming packets to a higher layer for further processing.

## Description

### BACKGROUND OF THE INVENTION

### 1. Field of the Invention

The present invention relates to a wireless LAN protocol, and in particular to a wireless LAN packet control protocol for a video streaming.

### 2. The Prior Arts

With the rapid development of internet, broad band technologies such as ADSL and Cable Modem are getting more and more popular and mature, along with the prevalence of online games, videos, and music, which was limited because of low bandwidth at the user end.

Most online videos adopt streaming technology. Media Player by Microsoft and RealPlayer by RealNetworks are two most popular streaming softwares. The streaming technology, with the help of a buffer, is capable of playing a video before it is completely downloaded. In addition, with the development of wireless transmission technology, more and more users will watch streaming videos through wireless transmission.

Currently, the most common wireless network standards are IEEE 802.11x series. They are common wireless LAN standards developed by IEEE (The Institute of Electrical and Electronics Engineers). The original IEEE 802.11 standard is set for data access, with a max. data rate of 2 Mbps. The data rate is too low to meet the requirement of informational application development, so the IEEE developed other new standards: IEEE 802.11b, 802.11a, and 802.11g. The differences among them will be briefly described below.

802.11b is the most adopted standard by common users, which has a max. data rate of 11MB per second in an outdoor range of 300 meters and an indoor range of 100 meters. 802.11b employs dynamic rate shift and is capable of switching among 11 Mbps, 5.5 Mbps, 2 Mbps, and 1 Mbps in accordance with the environmental change.

Although 802.11b operates on a data rate of 11 Mbps (typically 550~600 KB/s), which is enough for most broad band users as far as the access rate is concerned, its specification does not meet the requirement of the growing broad-band network. Even for personal users, many have a household broad-band access rate of over 1 MB/s, which is way beyond the capacity of 802.11b.

As a successor of 802.11b, 802.11a has a lot of advantages. Firstly, it provides higher security. Its 12 channels help to reduce interference. In addition, 802.11a has a data rate five times higher than that of 802.11b, at a maximum of 54 Mbps, which may accommodate more users simultaneously. Furthermore, 802.11a operates in a unique 5 GHz band, which gives the 802.11a the advantage of less interference over 802.11b/g. This is because many household electronic appliances operate in 2.4 GHz band, which is identical to that of 802.11b/g and causes interference. For example, if both the wireless LAN and wireless telephone are installed at a household, the communication quality of the wireless phone will be unstable because of interference. Other such appliances include Bluetooth devices and microwave ovens.

Though the 5 GHz band bestowed 802.11z a better anti-interference ability, it also tolls the death bell of it. The higher frequency restricts the transmission range of 802.11a substantially, because the 5 GHz frequency electromagnetic wave has poorer echo and diffraction than 2.4 GHz electromagnetic waves when obstructed by walls, floors, or furniture, etc., which results in a much smaller cover range. Besides, the complicated design required substantially increases the manufacturing cost of wireless products conforming to 802.11a standard than those to 802.11b.

As both 802.11b and 802.11a are not satisfactory, IEEE developed a new 802.11g standard, which is beginning to be adopted in new applications. Compared with 802.11a, 802.11g provides an equal 54 Mbps data rate while utilizing the 2.4 GHz band as the 802.11b, which solves the problem of compatibility when upgraded. 802.11g also inherits the advantages of a large covering range as well as low price of 802.11b. By purchasing a corresponding wireless AP, a user may easily convert to a "g" network while keeping using the original 802.11b wireless LAN card, which gives 802.11g a much higher flexibility than 802.11a.

The advantage of 802.11g, in short, lies in that it has the speed of 802.11a and better security than 802.11b while compatible with the latter. However, 802.11g, the same as 802.11b, utilizes 3 channels. The small number of communication channels provides lower security than 802.11a.

For users, whether adopting stream technology to play videos, the fluency of the video is of topmost demand; lag is barely tolerable. However, if the wireless transmission is intervened, stream stall is liable to occur, which is likely to make the user impatient, even unwilling to use it again.

Traditional TCP transmission protocol, in order not to waste bandwidth, waits for 5 to 10 seconds for confirming that a packet is lost before requesting the sender to transmit again. Thus, often the lag does not result from low bandwidth, but from waiting to request for retransmission when intervened. In addition, traditional TCP transmission protocol requests retransmission of a whole data frame once it detects lost data packets in the data frame. However, sometimes only some of the data packets are lost. There is no need to retransmit the whole data frame. Sometimes, all the data packets are delivered except that the acknowledge characters (ACK) are not sent back successfully, which misleads the sender to judge that the packets are not delivered.

### SUMMARY OF THE INVENTION

An objective of the present invention is to provide a wireless LAN packet control protocol for video streaming, which, with its wise judgment mode, requests retransmission of those packets that actually require retransmission, and further smoothes the playback of a streaming video.

Based on the aforementioned objective, the wireless LAN packet control protocol for video streaming in accordance with the present invention operates mainly on or below the IP layer. The protocol will check the continuity of a number of streaming packets received according to their continuous serial numbers. If the streaming packets are not continuous, it will request the retransmission of the corresponding lost packet, and store the other received but non-continuous streaming packets temporarily, instead of discarding all packets as in the conventional art. After the retransmitted streaming packet is received, it, along with those reserved streaming packets, will be sent to a higher layer for further processing.

### BRIEF DESCRIPTION OF THE DRAWINGS

The present invention will be apparent to those skilled in the art by reading the following detailed description of a preferred embodiment thereof, with reference to the attached drawings, in which:

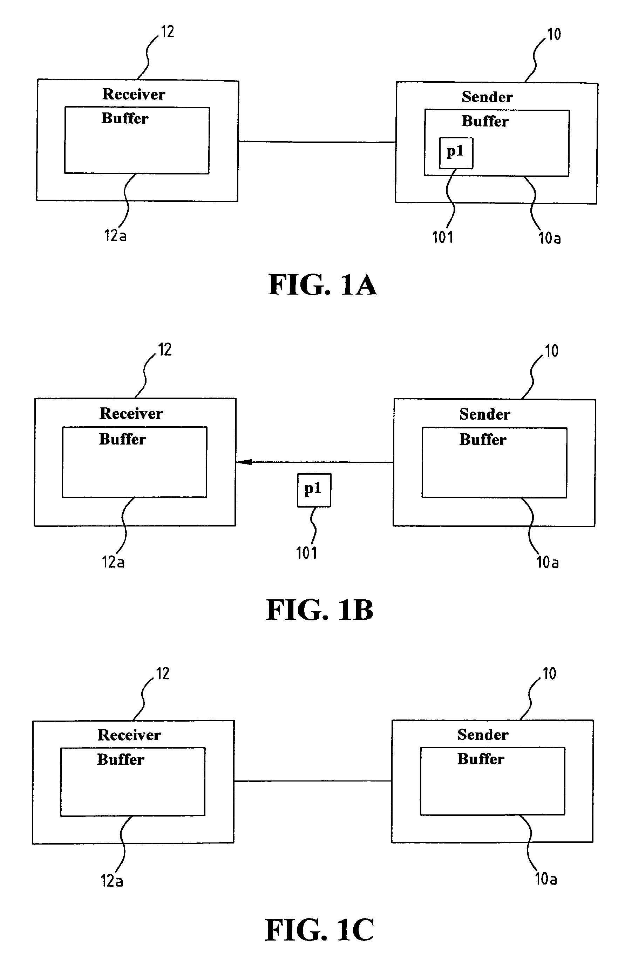

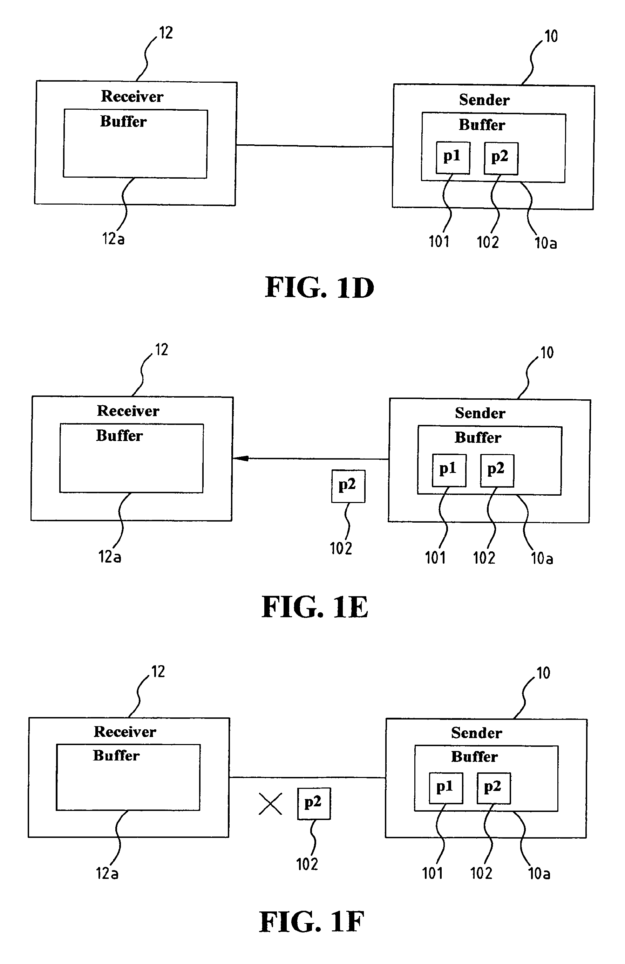

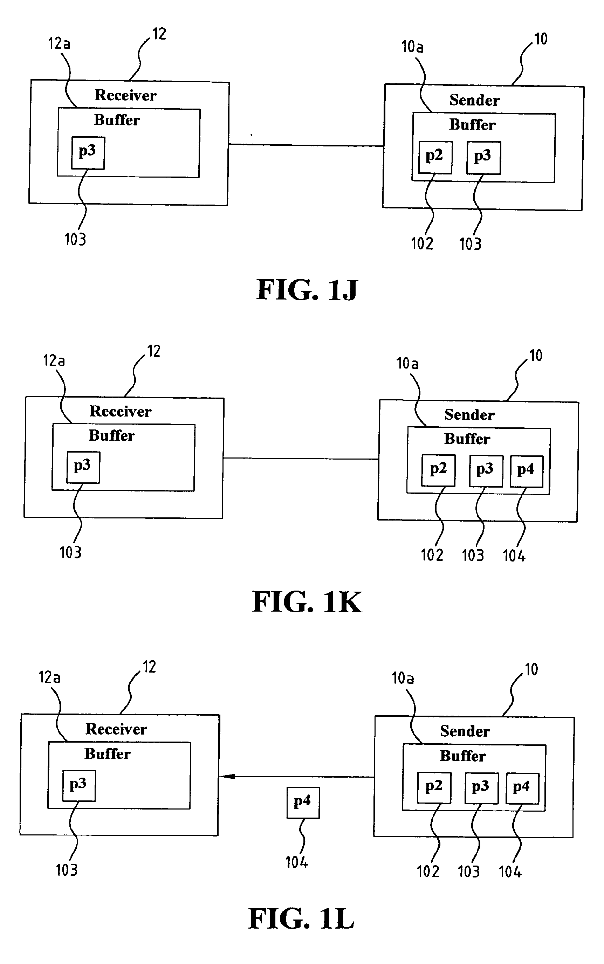

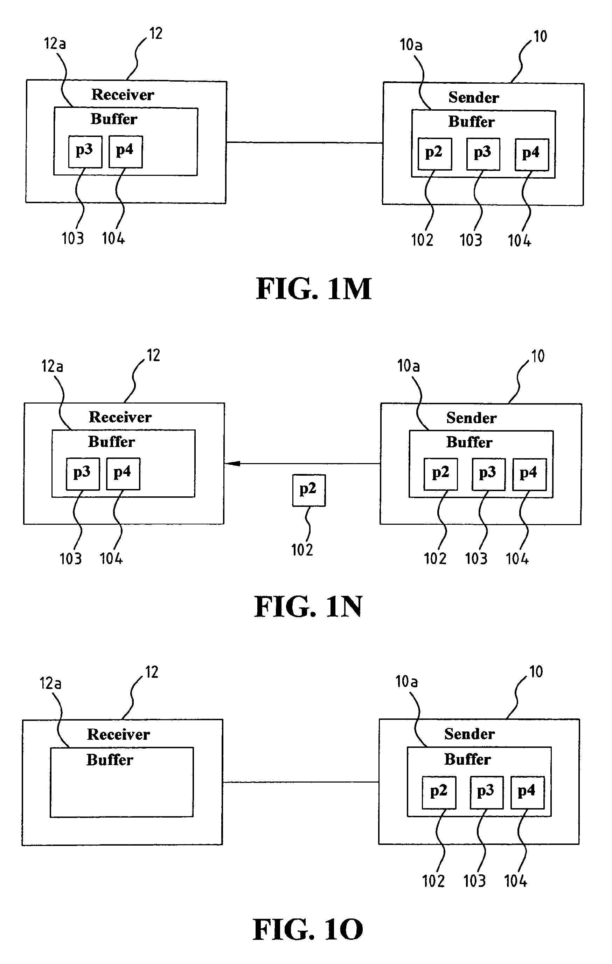

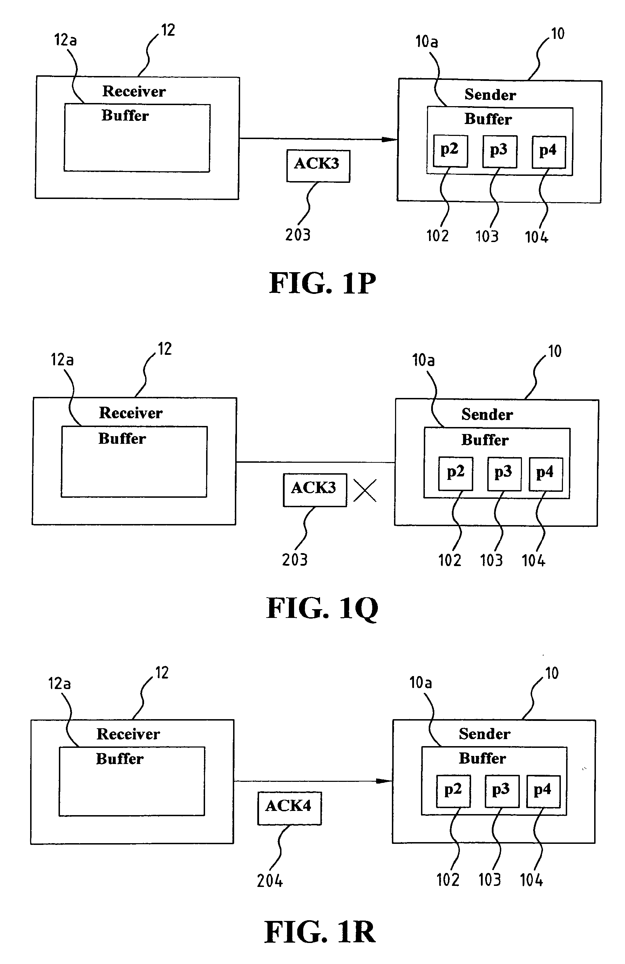

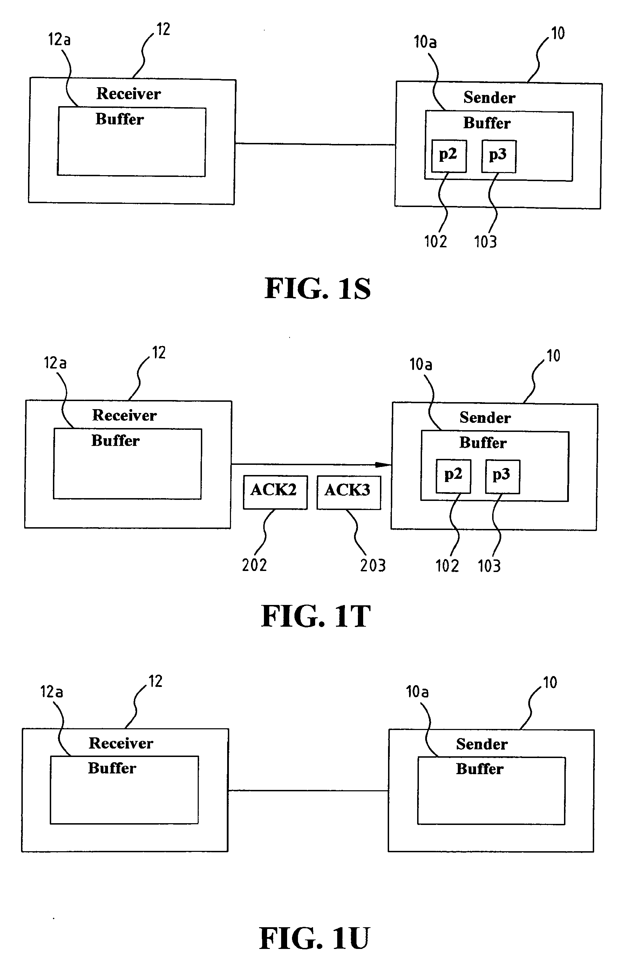

Figures 1A-1U are schematic views of a system adopting a wireless LAN packet control protocol for video streaming in accordance with the present invention.

### DETAILED DESCRIPTION OF THE PREFERRED EMBODIMENT

Though a wireless LAN Packet Control Protocol (WPCP) for video streaming in accordance with the present invention may completely substitute the conventional transmission protocol, to ease the population thereof, the present invention will not make any changes toward to application layer, so that Media Player by Microsoft and RealPlayer by RealNetworks may operate without any modifications. Accordingly, the WLAN packet control protocol of the present invention operates on or below an IP layer of a wireless network device, and may effectively cover protocols used for stream media transmission, such as IP/UDP/TCP etc., and further modify IP/UDP protocol. However, the present invention will have different implementations toward different wireless platforms. Typically, 802.3 packets will be tunneled in WPCP packets. For Airgo, the WPCP information will be appended to the end of the original packet.

The WLAN packet control protocol in accordance with the present invention, with its wise judgment mode, requests retransmission of those packets that actually require to be retransmitted only, instead of requesting retransmission of all packets regardless of the necessity as in conventional protocols. In this way, when packets are lost, the data frame may be gathered up more quickly, so that a streaming video may be played with high fidelity and better fluency. In addition, it takes mere 10-100 microseconds for the present invention to confirm lost packets; thereby the lost packets may be requested to be transmitted within a shorter time, so as to be able to avoid interference when retransmitted.

Please refer to Figures 1A-1U, which are schematic views of a system utilizing the WLAN packet control protocol for video streaming in accordance with the present invention.

To put it simply, to judge which packet is to be retransmitted, the WLAN packet control protocol in accordance with the present invention will assign each packet with a continuous related serial number (such as 1, 2, 3, 4...) in order to check which packet is lost. If packet p2 102 is lost (as shown in Figure 1F), only packet p2 102 will be retransmitted in the following retransmission procedure (as shown in Figure 1N). The retransmitted packet p2 102 will then be sent to a higher layer with other delivered packets p3 103 and p4 104 (which are stored temporarily in a buffer 12a) for further processing. In the prior art, on the contrary, not only the lost packet p2 102 but also the delivered packets p3 103 and p4 104 will be requested to be retransmitted.

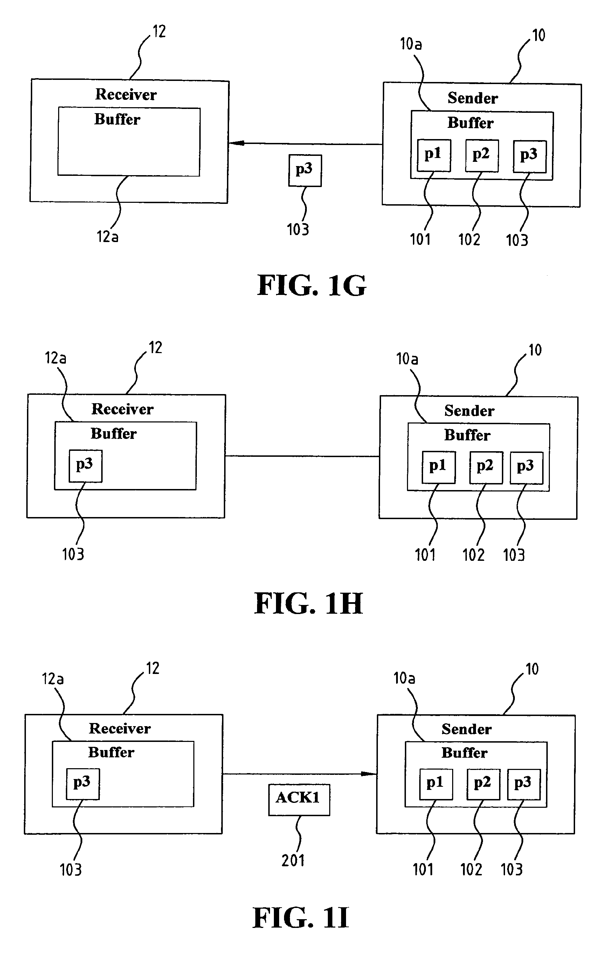

Before a further demonstration of the aforementioned judgment procedure of packet retransmission is given, the temporary storage procedure of packets by a sender 10 and a receiver 12 will be briefly described below, followed by demonstrations of successful delivery (as shown in Figures 1A-1C), lost packet (as shown in Figures 1D-1F), storing non-continuous packets (as shown in Figures 1G-1H, 1M-1N), and delivery confirmation (as shown in Figures 1I-1J). For example, when packets p1 101, p2 102, p3 103, and p4 104 are to be transmitted from sender 10 to receiver 12 seriatim, both the sender 10 and the receiver 12 will store the packets temporarily in the buffer 10a and 12a when necessary.

The sender 10 will store packets to be transmitted (packet p1 101 shown in Figure 1A and packet p2 102 shown in Figure 1D) or packets whose corresponding acknowledge characters (ACK) have not been received yet in the buffer 10a temporarily. As shown in Figure 1I, before confirming that the packets have been delivered to the receiver 12, the sender 10 will reserve the packet p1 101. After receiving the ACK1 201, it will remove the packet p1 101, as shown in Figure 1J.

The receiver 12 stores non-continuous packets temporarily until all the packets are continuous before sending them to a higher layer. For example, as shown in Figure 1N, after the packet p2 102 is successfully delivered to the receiver 12, the temporarily stored packets p3 103 and p4 104 will no longer be reserved, as shown in Figure 1O.

Without circumstantial interference, most wireless communication devices are capable of transmitting packet p1 101 successfully to the receiver 12, as shown in Figures 1A-1C. However, when the next packet p2 102 is being transmitted, as shown in Figures 1D-1F, it may experience interference and fail to be delivered. In the present invention, to confirm the successful delivery of the packet p2 102, an acknowledge character (ACK) is employed.

As the sender 10 has not received an ACK or a report from the receiver 12, it has no knowledge that the P2 102 has failed to be delivered and will move on to transmit the next packet p3 103, as shown in Figures 1G-1H. However, as shown in Figure 1H, the receiver receives the packet p3 103 instead of p2 102. When checking the continuity of the serial numbers of the packets based on the fact that each packet is assigned a continuous serial number, it will detect that the packet p2 102 is lost. As shown in Figure 1I, when the receiver 12 sends back ACK1 201, besides reporting packet p1 101 has successfully arrived, it may also request retransmission of packet p2 102. However, it does not need to report lost packet or request retransmission immediately, and may wait a while for the ACK of packet p2 102 to arrive. The delivered packet p3 103 will be stored in the buffer 12a of the receiver 12 until packet p2 102 arrives to be sent to a higher layer together, instead of being discarded as in the prior art.

It is to be noted that the receiver 12 may send the ACK at a predetermined interval or when the ACK's to be sent have reached a predetermined amount. An ACK includes a confirmation message toward a particular or a number of delivered packets or a request of retransmission of a packet.

As shown in Figure 1J, when the lost packet p2 102 results in discontinuity, the receiver 12 will store packet p3 103 temporarily. On the other hand, the sender 10 also stores packet p2 102 and p3 103 in the buffer 10a because it has not received the ACK's thereof. The sender 12 will go on to transmit packet p4 104, as shown in Figures 1K-M. Though packet p4 104 is delivered to the receiver 12 successfully, it will be stored in the buffer 12a temporarily because the packet p2 102 that was requested to be retransmitted has not arrived.

When the retransmitted packet p2 102 is successfully delivered to the receiver 12, as shown in Figure 1N, packets p2 102, p3 103, and p4 104 form continuity, so the receiver 12 will no longer store these packets temporarily, but send them together to the higher layer. However, as the sender 10 has not received the ACK's of packets p2 102, p3 103, and p4 104, they are still stored temporarily in the buffer 10a of the sender 10.

To report that packet p3 103 has been successfully delivered, the receiver 12 will try to send ACK 3 203 to the sender 10, as shown in Figure 1P, but the ACK is interfered and does not arrive successfully, as shown in Figure 1Q, which makes the sender judge mistakenly that the packet p3 103 was not delivered, and will try to retransmit packet p3 103 later. However, as the packet p3 103 was delivered, the receiver 12 will discard the retransmitted packet p3 103 without processing it.

Then, as shown in Figure 1R, the receiver 12 continues to send ACK4 204, which is delivered to the sender 10, as shown in Figure 1S. The sender 10 then removes the packet p4 104 from the buffer 10a. Finally, ACK2 202 and ACK 3 203 are transmitted, as shown in Figure 1T, so that the buffer 10a of the sender 10 are completely emptied, as shown in Figure 1U.

In order to avoid the failure to deliver ACK3 203 back to the sender 10 as shown in Figure 1Q, so as to cause the sender 10 to try to retransmit the packet p3 103 later, when the receiver 12 delivers ACK4 204, it simultaneously informs that the packet p3 103 has been received to avoid retransmission of the packet p3 103 to the receiver 12. In this way, whenever the packets or the corresponding ACKs are lost during transmission, retransmission, which wastes bandwidth sources, can be effectively avoided.

In addition, while the sender 10 transmits the packets p1 101, p2 102, p3 103, and p4 104 to the receiver 12 seriatim, besides the aforementioned selective retransmission, unicast protocols should be adopted instead of multicast protocols to avoid being restricted by the bandwidth limitation of multicast protocols (i.e., 2 Mbps) and to increase bandwidth capacity. If a multicast protocol is adopted originally, it has to be converted to a unicast protocol before wireless transmission starts. In short, the single data stream of the multicast protocol will be converted to a corresponding number of data streams according to different destination addresses.

The aforementioned operational modes requires temporary packet storing, which poses a high demand on the hardware of the sender 10 and the receiver 12 that execute the procedures. Thus, the WLAN packet control protocol in accordance with the present invention will be optional based on whether the data frame bears special markers, etc.

Furthermore, an automatic checking procedure is required before utilizing the WLAN packet control protocol in accordance with the present invention in the wireless network devices in order to make sure that both the sender 10 and the receiver 12 support the present invention. For example, when the sender 10 is a WLAN AP and the receiver 12 is a WLAN client, the WLAN AP will transmit the regulations of WPCP to the WLAN client first, and start WPCP communication after the corresponding registration is completed.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A wireless LAN packet control protocol for video streaming, comprising the steps of:
sending a plurality of streaming packets from a sender to a receiver, in which said streaming packets are in continuous relationship with a serial number;
having said receiver check the continuity of said streaming packets received based on said serial numbers assigned to said streaming packets;
upon detecting discontinuity of said serial numbers of said streaming packets, requesting said sender to retransmit only said corresponding packet, and storing other received but discontinuous said streaming packets temporarily; and
after receiving said retransmitted streaming packets, processing it along with other said temporarily stored streaming packets.

2. The wireless LAN packet control protocol as claimed in Claim 1, further comprising the step of:
after receiving said streaming packets, sending by said receiver an acknowledge character (ACK) to said sender.

3. The wireless LAN packet control protocol as claimed in Claim 2, wherein said receiver sends said ACK at a predetermined interval or when said ACK to be sent has reached a predetermined number.

4. The wireless LAN packet control protocol as claimed in Claim 2, wherein said ACK includes a confirmation message toward a particular or a number of said streaming packets received.

5. The wireless LAN packet control protocol as claimed in Claim 2, wherein said ACK includes a request for retransmission of said streaming packets.

6. The wireless LAN packet control protocol as claimed in Claim 2, further comprising the step of:
when said sender has not received said ACK corresponding to said streaming packets, retransmitting by said sender said streaming packets to said receiver.

7. The wireless LAN packet control protocol as claimed in Claim 1, wherein said sender adopts a unicast protocol when transmitting said streaming packets to said receiver, and a multicast protocol is able to be converted to a unicast protocol when necessary.
